# EUROPEAN PATENT SPECIFICATION

(11) **EP 2 997 818 B1**
(45) Date of publication and mention of the grant of the patent: **27.03.2019**
(21) Application number: 14798448.8
(22) Date of filing: 12.03.2014
(51) Int. Cl.: A01G 9/12, A01G 31/00

(54) **CULTIVATION DEVICE**
KULTIVIERUNGSVORRICHTUNG
DISPOSITIF POUR CULTURES

(30) Priority: 14.05.2013 ES 201330582 U
(43) Date of publication of application: 23.03.2016
(73) Proprietor: Comercial J. Huete, S.L., 30820 Alcantarilla (Murcia) (ES)
(72) Inventor: HUETE GARCÍA, José Javier, 30820 Alcantarilla (Murcia) (ES)
(74) Representative: Ungria López, Javier
(86) International application number: PCT/ES2014/070175
(87) International publication number: WO 2014/184406

(56) References cited:
- EP-A2- 1 245 148
- WO-A1-81/01495
- WO-A1-93/19584
- WO-A1-2012/034575
- WO-A1-2012/034575
- ES-U- 1 077 581
- FR-A1- 2 500 720
- GB-A- 2 266 647
- JP-A- 2000 199 265
- US-A1- 2004 017 090

## Description

### OBJECT OF THE INVENTION

As expressed in the title of this description, this invention refers to a cultivation device aimed first at physically separating any hydroponic substrate or decorative plant pot from a drainage collection channel or from a flood bottom, both elements being located under a spacer element which along with the drainage collection channel comprise the device of the invention.

The primary aim of the invention is preventing the roots of the cultivation, which may come out from the sack, bag, channel or plant pot containing the substrate, from coming into contact with the drainage water running through the channel and coming from other sacks, bags or channels or plant pots, thus avoiding the possible infection or contamination of some plants with others, and facilitating drainage circulation and collection.

The action of the support device of the invention is possible thanks to the physical separation existing between the substrate and the bottom of the collection channel, thus reducing humidity in said area.

Therefore, the design of the invention device facilitates the reduction of humidity due to the small space it occupies, which helps water to circulate quickly through the channel and also provides the area with great aeration, avoiding humidity on the support device itself, succeeding in drying the roots and preventing them from growing and reaching the bottom of the drainage collection channel, and also avoiding proliferation and dissemination of fungal diseases.

A second goal of the invention is providing anchoring means to attach the spacer element to the drainage collection channel. The purpose of this second goal is to avoid displacements of the spacer element along the longitudinal axle of the channel, thus succeeding in maintaining the spacer element centered, fixed and fastened.

A third goal of the invention is to provide means to block both ends of the channel and at the same time allow the drainage flow to exit through both ends of the channel in a controlled way by means of a typical drain.

### BACKGROUND OF THE INVENTION

The market offers a variety of drainage collection channel models, manufactured with different materials, such as smooth polypropylene, reticulated polypropylene, PVC, polystyrene, metallic materials. An example of a cultivation device with a drainage collection channel is shown in GB 2 266 647 A.

Each of these drainage channels evacuates the leachate differently. In general, it is the shape of the channel itself what facilitates the drainage evacuation. Some of said models use a spacer that physically separates the sack of the channel substrate, although its design has not managed to prevent the roots from coming into contact with the drainage water. This occurs because the material used occupies a large volume of the space between the substrate and the channel, resulting in high humidity as a consequence of the deficient water circulation and scarce air ventilation.

In some cases, the spacers are fastened to the channel by means of clips, manufactured with different materials, such as smooth polypropylene, reticulated polypropylene, PVC or metallic materials.

Each of said fastening clips allow for the channel to be adjusted differently. Some of said models use a clip and cords which tie the sides of the channel and, although their design succeeds in maintaining the sides of the channel open, they do not succeed in maintaining the drainage spacer and the irrigation pipe attached to said channel.

Drainage channels are provided in polypropylene coils or bobbins that are unwound in the greenhouse. At the ends of the channel lines the drainage needs to be provided with an outlet and be redirected to connect a flexible hose.

The market offers several plug or lid models, manufactured with different materials, such as smooth polypropylene, reticulated polypropylene, PVC or metallic materials.

The solutions available in the market consist in stapling the channel ends and closing them by folding the channel corners. To provide the drainage with an outlet, an orifice is made (in situ) in the channel base to attach any PVC connection. Said closures entail that drainages may escape the channel due to their inadequate water-tightness. Another additional problem is that the closure of both channel ends and the drainage pipes is carried out manually and in situ, requiring a great variety of materials and irrigation accessories.

### DESCRIPTION OF THE INVENTION

With the aim of attaining the goals and avoiding the inconveniences mentioned in previous sections, the invention proposes a cultivation device comprising a spacer element arranged in a drainage collection channel, and a substrate contained inside a container element, such as a plant pot, bag or the like, is arranged on the spacer element.

The channel comprises a bottom and two sides, the spacer element being fixed to the sides of the channel by means of anchoring frames, each of them comprising a single-piece unit.

The spacer element comprises:
- A grid structure on the upper face of which is arranged the container element of the substrate.- Supporting legs which extend from the lower face of the grid structure and stand on the bottom of the drainage collection channel.

In this scenario, the spacer element is located inside the inner space of the channel, generating a large drainage space between the grid structure and the encasing structure of the drainage collection channel, the supporting legs being located in this large drainage space.

The supporting legs extend from junction points where longitudinal and transverse profiles converge, composing the grid structure.

The junction points of the supporting legs are reinforced through reinforcing fins joined to the supporting legs themselves and also to the cross-linked profiles of the grid structure.

The grid structure comprises longitudinal and transverse profiles with a T section, except for the peripheral profiles which have an angular section.

The spacer element of an embodiment comprises a single piece, whereas another embodiment describes a modular structure comprised of several independent spacer elements joined together by their adjacent rims through tongue-and-groove couplings composed by tongue and groove element pairs located in the peripheral profiles of said spacer elements.

The anchoring frames constitute the fixing means of the spacer elements to the sides of the channel.

Each anchoring frame comprises:
- An inverted-U profile with each side of the channel being press-fitted in the inner space.
- An angular profile, the two branches of which are arranged against side profiles of the spacer element, said side profiles also having an angular configuration that also comprises the above-mentioned peripheral profiles.

The ends of the branches of the angular profile of the anchoring frame end at L-shaped flanges, which are snap-fitted to free rims of the two branches of the side profiles of the spacer element.

The inverted-U profile of the anchoring frames comprises branches converging towards their free ends, one of them having an end portion splitting outwards thus enabling the insertion of the side of the channel into the inner space defined by the two branches of this inverted-U profile, the respective side of the channel being locked in between both branches.

Each anchoring frame also comprises a horse-shoe-shaped support where a drip irrigation pipe is snap-fitted, said irrigation pipe facing a side area of the hollow space defined by the encasing structure of the channel.

The ends of the channel are tightly closed by means of lids, each of which includes at least one drainage pipe; where the lids are coupled to the ends of the channel through tongue-and-groove couplings.

Each of said lids comprises a front plate and a reinforcing frame with a C section which includes along its full length a continuous groove where each of the ends of the channel is press-fitted.

The drainage pipe extends from a lower and centred part of the front plate belonging to the lid.

The upper rim of the front plate is reinforced by means of a longitudinal fin combined with ribs.

The anchoring frame serves the dual purpose of being able to fix, at a defined height, the irrigation pipe placed longitudinally, both in relation to the spacer element and to the channel, thus preventing it from being damaged during cultivation activities.

Another function of the fastening means through the anchoring frame is preventing the irrigation pipe from being displaced from its location as a result of the thermal expansions and water pressures contained therein. In addition, it performs the function of maintaining the sides of the channel in vertical position.

The last function of the fastening means through the anchoring frame is that it also arranges the irrigation pipe within the channel action area, thus preventing water from logging on the floor near the channel that may result from accidental leaks of a damaged drip.

Said fastening means through the anchoring frame is placed in the upper part of the channel sides, on both sides thereof, and, in an embodiment, said anchoring frames are longitudinally arranged, 25 cm apart from each other.

Therefore, the design of the invention device helps to join, fix and center the spacer element on the bottom of the cultivation channel, which prevents the spacer element from being displaced from its longitudinal axle, allowing the irrigation pipe to be fixed at a height so as to avoid damages due to cultivation activities, and placing the irrigation pipe within the channel action area so as to drain the water flowing from damaged drips, thus preventing water from logging on the floor near the cultivation.

The aim of the lids is closing both ends of the channel, while allowing for a quick, unobstructed evacuation of the drainage collected by the channel.

The connection between the sides and the bottom of the channel is a rounded connection, which facilitates the correct adjustment of the lids when fixed to the ends of said channel, or to the ends of each line of channels.

Finally, it is worth noting that a regular pipe or hose may be connected to the drainage pipes to extract the drainage from a greenhouse where the device of the invention is installed.

Hereinafter, in order to ensure a better understanding of the present description, the object of the invention has been detailed in a series of drawings that are an integral part of said description and are included for illustrative purposes and should not be construed as limiting said invention.

### BRIEF DESCRIPTION OF THE DRAWINGS

Figure 1 represents a front view of the cultivation device for the separation and aeration of hydroponic substrates. The device comprises a spacer element arranged in correspondence with a drainage collection channel, the spacer element being fastened thereto by means of anchoring frames.

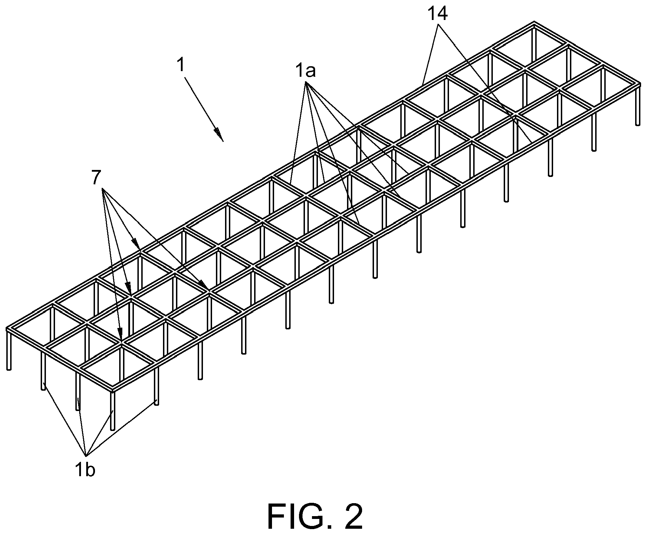

Figure 2 shows a perspective view of the spacer element.
Figure 3 represents a perspective view of several spacer elements joined together, on which substrate-containing plant pots where plants are rooted stand.
Figure 4 shows a view similar to the previous one, where the spacer element supports a substrate bag. The spacer element is located in a drainage collection channel.
Figure 5 shows a perspective view of a spacer element.
Figure 6 shows a perspective view of a channel closed at one end by means of a lid comprising a drainage pipe.
Figure 7 shows a top plan view of the lid mentioned in the previous figure.

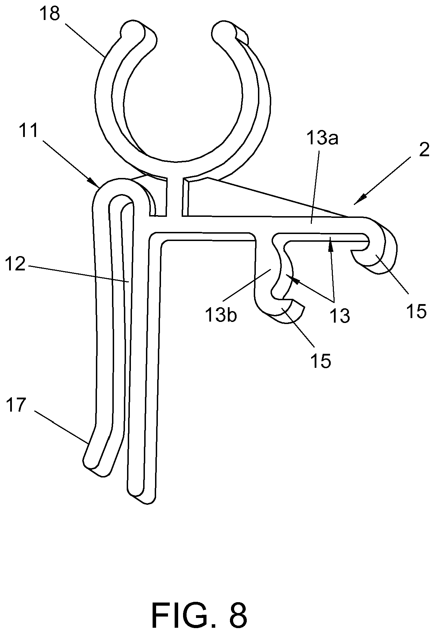

Figure 8 shows an elevation view of one of the anchoring frames.

### DESCRIPTION OF A SAMPLE EMBODIMENT

Considering the numbering adopted in the figures, the cultivation device has the following nomenclature used in the description:
1.- Spacer element.
1a.- Grid structure.
1b.- Supporting legs.
2.- Anchoring frame.
3.- Drainage collection channel.
3a.- Bottom.
3b.- Sides.
4.- Plant pot.
5.- Bag.
6.- Plant.
7.- Junction points.
8.- Reinforcing fins.
9.- Tongue element.
10.- Groove element.
11.- Inverted-U profile.
12.- Inner space.
13.- Angular profile.
13a.- Branch.
13b.- Branch.
14.- Side profiles.
15.- L-shaped flanges.
16.- Free rims.
17- Outward-splitting end portion.
18.- Horse-shoe-shaped support.
19.- Irrigation pipe.
20.- Lid.
20a.- Front plate.
20b.- C reinforcing frame.
21.- Drainage pipe.
22.- Continuous groove.

It comprises a spacer element (1) integrating a grid structure (1a) in combination with supporting legs (1b) arranged on a bottom (3a) of a drainage collection channel (3) so that the spacer element (1) is placed along the inner space of the drainage collection channel (3). The channel (3) comprises the bottom (3a) and two sides (3b).

The spacer element (1) is fixed to the sides (3b) of the channel (3) by means of anchoring frames (2).

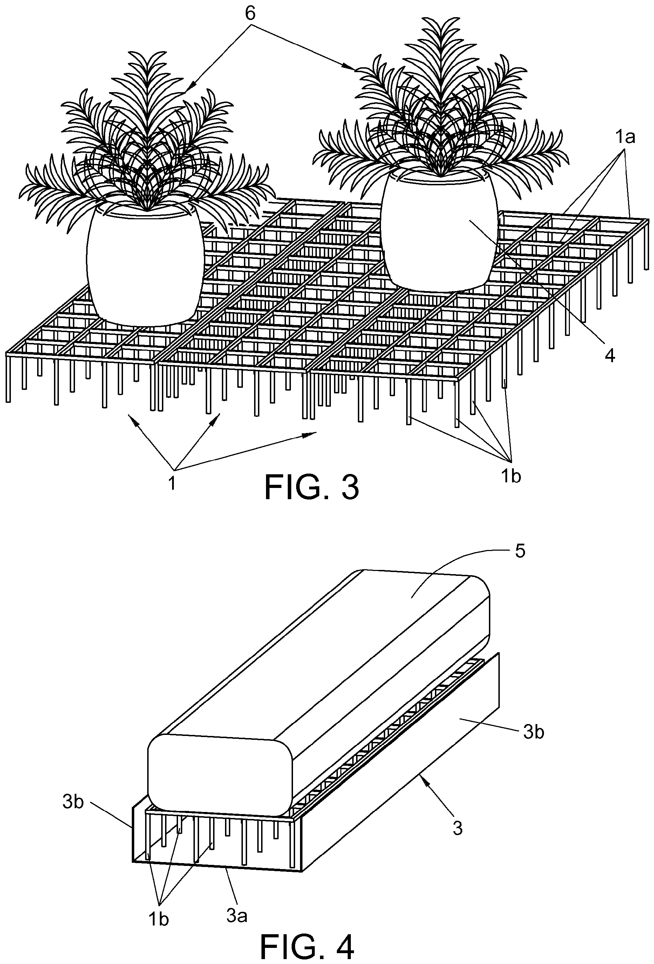

The grid structure (1a) is composed of cross-linked longitudinal and transverse profiles on whose upper face stands a substrate-containing element: either a plant pot (4) with substrate where a plant (6) is rooted, as shown in Figure 3, or a substrate bag (5), as shown in Figure 4.

The elements (plant pot (4) and bag (5)) containing the substrates stand on the upper face of the grid structure (1a), whereas from the upper face of said grid structure (1a) the supporting legs (1b) extend downwards; specifically, they extend from the junction points (7) of the longitudinal and transverse profiles of said grid structure (1a).

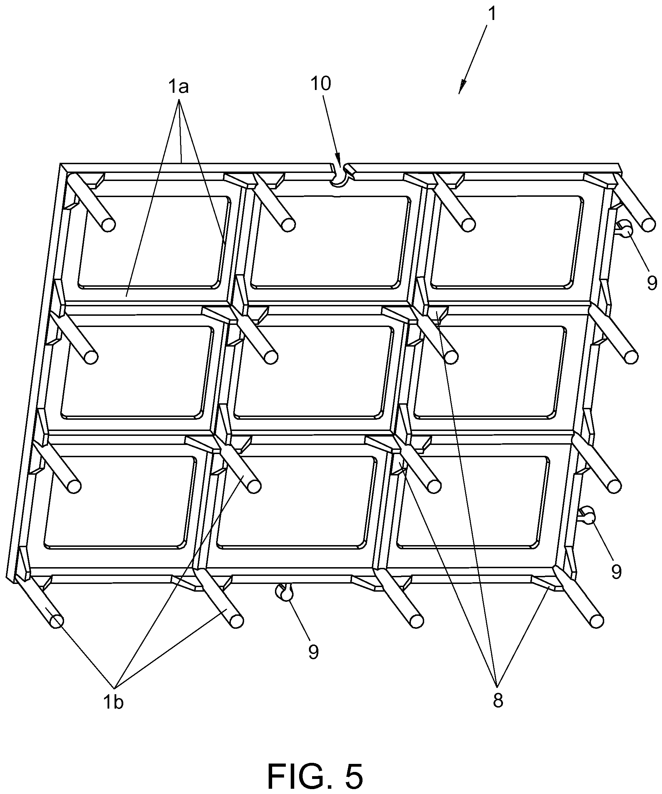

As it is more clearly shown in Figure 5, the cross-linked longitudinal and transverse profiles show a T section, except for the peripheral profiles which have an angular section.

As it is also more clearly shown in Figure 5, the junction points (7) of the supporting legs (1b) are reinforced by reinforcing fins (8) which are connected to the cross-linked longitudinal and transverse profiles of the grid structure (1a), the supporting legs (1b) themselves also being connected.

In an embodiment, as shown in Figure 5, the spacer element (1) comprises a single piece.

In another embodiment, the spacer element (1) comprises a modular structure including several spacer elements (1) joined together through a tongue-and-groove coupling by means of tongue (9) and groove (10) element pairs, each of them arranged in correspondence with the peripheral profiles of the grid structure (1a).

Mainly due to the immaterial obstacle offered by supporting legs (1b), drainage water runs quickly and easily through the drainage collection channel (3), and the area is easily aerated.

In addition, due to the existing separation between the element supporting the substrate and the drainage collection channel, roots are prevented from coming into contact with the drainage water.

These two factors favour a reduction of the humidity in the drainage space between the grid structure (1a) and the encasing inner space of the collection channel (3), thus helping to avoid the proliferation of roots in said area.

The addition of tongue elements (9) and groove elements (10) allows for connections, both in a longitudinal and a transverse direction.

The longitudinal connection allows for the creation of an in-line spacer to be applied on a drainage collection channel (3) along its full length.

Moreover, the longitudinal and transverse connection of several spacer elements (1) allows for the creation of a spacer base and its application on a flood floor.

As mentioned above, each spacer element (1) is fixed to the sides (3b) of the channel (3) by means of anchoring frames (2).

For said purpose, each anchoring frame (2) comprises:
- An inverted-U profile (11) with each side (3b) of the channel (3) being press-fitted in the inner space (12).
- An angular profile (13), the two branches (13a) and (13b) of which are arranged against side profiles (14) of the spacer element (1), said side profiles (14) also having an angular configuration.

The ends of the branches (13a) and (13b) of the angular profile (13) of the anchoring frame (2) end at L-shaped flanges (15) which snap-fit onto free rims (16) of the two branches of the side profiles (14) of the spacer element (1).

The inverted-U profile (11) of the anchoring frames (2) comprises branches converging towards their free ends, one of them having an end portion (17) splitting outwards, thus enabling the insertion of the side (3b) of the channel (3) into the inner space (12) defined by the two branches of this inverted-U profile (11), the respective side (3b) of the channel (3) being locked in between both branches.

The anchoring frame (2) also comprises a horse-shoe-shaped support (18) where a drip irrigation pipe (19) is snap-fitted.

In addition, the ends of the channel (3) are closed by means of lids (20) comprising drainage pipes (21).

Each of these lids (20) comprise a rectangular-shaped front plate (20a) and a reinforcing frame (20b) with a C section which includes along its full length a continuous groove (22) where each of the ends of the channel (3) is press-fitted. The upper rim of the front plate (20a) is reinforced by means of a longitudinal fin (23) combined with ribs (24).

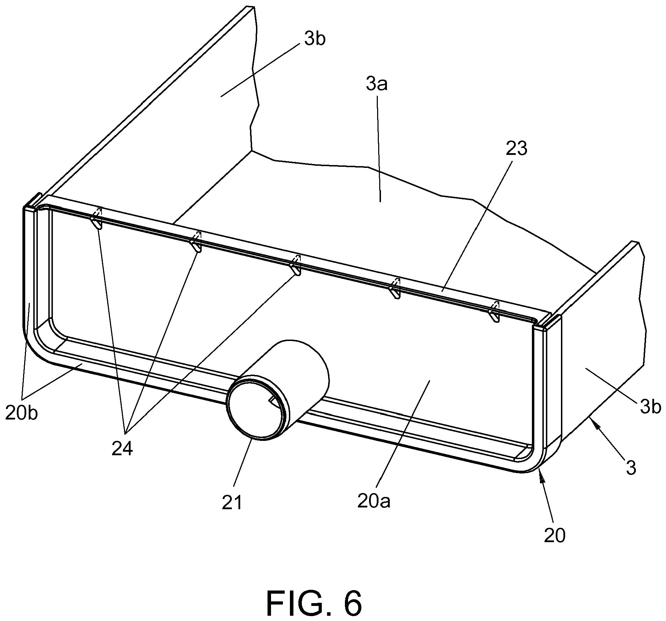

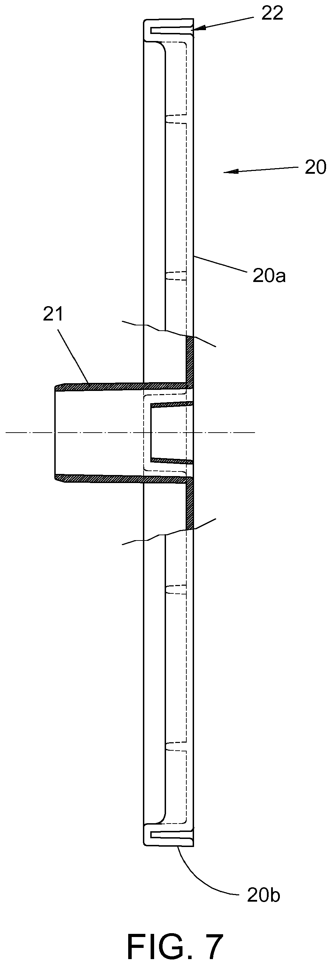

The drainage pipe (21) extends from a lower and centered part of the front plate (20a) comprising the lid (20), as shown in Figures 6 and 7.

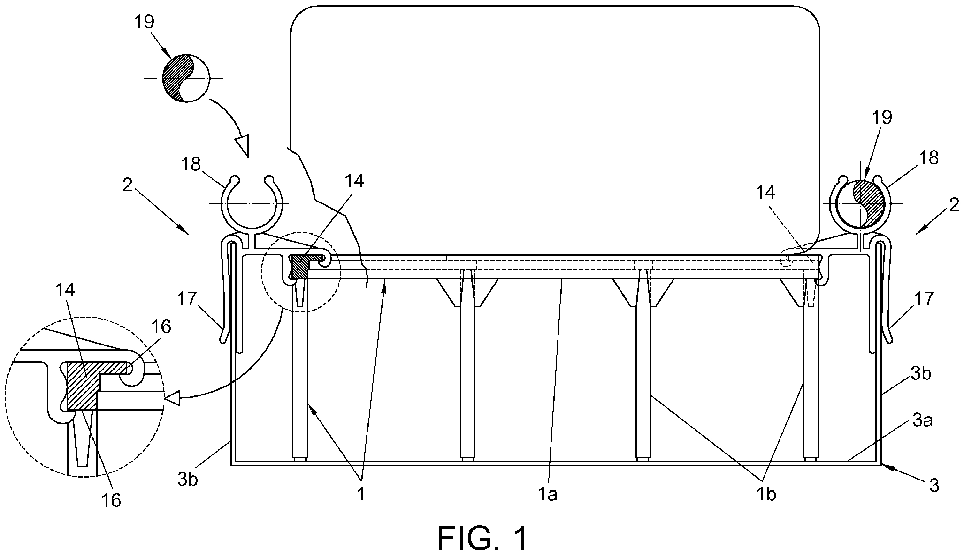

Figure 1 shows the connection or fixing-point of the irrigation pipe (19), both to the channel (3) and to the spacer elements (1), so that the irrigation pipe (19) is located within the channel (3) action area, thus any accidental leak of water arising from the irrigation pipe (19) will be collected and drained directly by the channel (3), preventing water from logging on the floor near the cultivation.

## Claims

1. A cultivation device comprising at least one spacer element (1) and a drainage collection channel (3), where the spacer element (1) is arranged in the drainage collection channel (3), and a substrate contained inside a container element (4,5) is arranged on the spacer element (1);
**characterized in that** the spacer element (1) comprises:
- a grid structure (1a) on the upper face of which is arranged the container element (4,5); wherein the grid structure (1b) comprises longitudinal and transverse profiles with a T section, except for peripheral profiles which have an angular section;
- supporting legs (1b) which extend from the lower face of the grid structure (1a) and stand on the bottom of the drainage collection channel (3), the supporting legs (1b) extend from junction points (7) where longitudinal and transverse profiles converge, composing the grid structure (1a);
where the spacer element (1) is arranged in the inner space of the drainage collection channel (3), generating a large drainage space between the grid structure (1a) and the encasing structure of the drainage collection channel (3), the supporting legs (1b) being located in this large drainage space.

2. A cultivation device, according to claim 1, wherein the junction points (7) of the supporting legs (1b) are reinforced through reinforcing fins (8) joined to the supporting legs (1b) and also to the grid structure (1a).

3. A cultivation device, according to any of the preceding claims, wherein it comprises a modular structure composed of several spacer elements (1) joined together through their adjacent rims through tongue-and-groove couplings made up of tongue (9) and groove (10) element pairs located in the peripheral profiles of said spacer elements.

4. A cultivation device, according to any of the preceding claims, wherein it comprises anchoring frames (2) as fixing means of the spacer elements (1) to sides (3b) of the drainage collection channel (3).

5. A cultivation device, according to claim 4, wherein each anchoring frame (2) comprises:
- an inverted-U profile (11) where each side (3b) of the drainage collection channel (3) is press-fitted in the inner space (12) of the inverted-U profile (11);
- an angular profile (13)with two branches (13a, 13b), where the two branches (13a, 13b) are arranged against side profiles (14) of the spacer element (1), said side profiles (14) also having an angular configuration.

6. A cultivation device, according to claim 5, wherein the ends of the two branches (13a, 13b) of the angular profile (13) of the anchoring frame (2) end at L-shaped flanges (15) which snap-fit onto free rims (16) of the two branches of the side profiles (14) of the spacer element (1).

7. A cultivation device, according to any of the preceding claims 5 or 6, wherein the inverted-U profile (11) of the anchoring frames (2) comprises branches converging towards their free ends, where one of them has an end portion (17) splitting outwards thus enabling the insertion of the side (3b) of the drainage collection channel (3) into the inner space (12) defined by the two branches of this inverted-U profile (11), the respective side (3b) of the drainage collection channel (3) being locked in between both branches.

8. A cultivation device, according to any of claims 4 to 7 wherein each anchoring frame (2) further comprises a horse-shoe-shaped support (18) where a drip irrigation pipe is snap-fitted, where this irrigation pipe (19) faces a side area of the hollow space defined by the encasing structure of the drainage collection channel (3).

9. A cultivation device, according to any of the preceding claims 5 to 8, wherein the ends of the drainage collection channel (3) are tightly closed by means of lids (20), each of which comprises at least one drainage pipe (21); where the lids (20) are coupled to the ends of the drainage collection channel (3) through a tongue-and-groove coupling.

10. A cultivation device, according to the preceding claim, wherein each of the lids (20) comprises a front plate (20a) and a reinforcing frame (20b) with a C section which includes along its full length a continuous groove (22) where each of the ends of the drainage collection channel (3) is press-fitted.

11. A cultivation device, according to claim 10, wherein the drainage pipe (21) extends from a lower and centered part of the front plate (20a) of the lid (20).

12. A cultivation device, according to any of the preceding claims 10 or 11, wherein an upper rim of the front plate (20a) is reinforced by means of a longitudinal fin (23) combined with ribs (24).

## Patentansprüche

1. Kultivierungsvorrichtung mit mindestens einem Abstandshalterelement (1) und einem Ablaufsammelkanal (3), wobei das Abstandshalteelement (1) in dem Ablaufsammelkanal (3) angeordnet ist, und mit einem Substrat, das im Inneren eines Behälterelements (4, 5) auf dem Abstandshalteelement (1) angeordnet ist;
**dadurch gekennzeichnet, dass** das Abstandshalteelement (1) aufweist:
- eine Gitterstruktur (1a), auf deren oberen Fläche das Behälterelement (4, 5) angeordnet ist;
- wobei die Gitterstruktur (1b) längsverlaufende und querverlaufende Profile mit einem T-Abschnitt mit Ausnahme von Randprofilen, die einen gewinkelten Abschnitt haben, aufweist;
- Trägerbeinen (1b), die sich von der unteren Fläche der Gitterstruktur (1a) aus erstrecken und auf dem Boden des Ablaufsammelkanals (3) stehen, wobei die Trägerbeine (1b) sich aus Verbindungspunkten (7) erstrecken, an denen die längsverlaufenden und querverlaufenden Profile zusammenlaufen, wodurch die Gitterstruktur (1a) gebildet wird;
- wobei das Abstandshalteelement (1) in dem Innenraum des Ablaufsammelkanals (3) angeordnet ist, einen großen Ablaufraum zwischen der Gitterstruktur (1a) und der umgebenden Struktur des Ablaufsammelkanals (3) bildet, und wobei die Trägerbeinchen (1b) in diesem großen Ablaufraum angeordnet sind.

2. Kultivierungsvorrichtung nach Anspruch 1, wobei die Verbindungspunkte (7) der Trägerbeine (1b) durch Verstärkungsstege (8) verstärkt sind, die mit den Trägerbeinen (1b) und auch mit der Gitterstruktur (1a) verbunden sind.

3. Kultivierungsvorrichtung nach einem der vorhergehenden Ansprüche, die eine modulare Struktur umfasst, die aus mehreren Abstandshalteelementen (1) zusammengesetzt ist, die durch die angrenzenden Ränder mittels Nut- und Federverbindungen miteinander verbunden sind, die aus Elementpaaren aus Feder (9) und Nut (10) aufgebaut sind, die in den Randprofilen der Abstandshalteelemente angeordnet sind.

4. Kultivierungsvorrichtung nach einem der vorhergehenden Ansprüche, die Verankerungsrahmen (2) als Befestigungsmittel der Abstandshalteelemente (1) an Seiten (3b) des Ablaufsammelkanals (3) aufweist.

5. Kultivierungsvorrichtung nach Anspruch 4, wobei jeder Verankerungsrahmen (2) aufweist:
- ein umgekehrtes U-Profil (11), wobei jede Seite (3b) des Ablaufsammelkanals (3) in den Innenraum (12) des umgekehrten U-Profils (11) durch Pressung eingepasst;
- ein Winkelprofil (13) mit zwei Zweigen (13a, 13b), wobei die zwei Zweige (13a, 13b) anliegend an Seitenprofilen (14) des Abstandshalteelements (1) angeordnet sind, wobei die Seitenprofile (14) einen gewinkelten Aufbau haben.

6. Kultivierungsvorrichtung nach Anspruch 5, wobei die Enden der zwei Zweige (13a, 13b) des Winkelprofils (13) des Verankerungsrahmens (2) an L-förmigen Flanschen (15) münden, die in freie Ränder (16) der beiden Zweige der Seitenprofile (14) des Abstandshalteelements (1) einrasten.

7. Kultivierungsvorrichtung nach Anspruch 5 oder 6, wobei das umgekehrte U-Profil (11) der Verankerungsrahmen (2) Zweige umfasst, die in Richtung ihrer freien Enden zusammenlaufen, wobei einer von ihnen einen Endbereich (17) hat, der sich nach außen aufteilt, wodurch das Einführen der Seite (3b) des Ablaufsammelkanals (3) in den durch die beiden Zweige dieses umgekehrten U-Profils (11) gebildeten Innenraum möglich ist, wobei die entsprechende Seite (3b) des Ablaufsammelkanals (3) zwischen beiden Zweigen verriegelt ist.

8. Kultivierungsvorrichtung nach einem der Ansprüche 4 bis 7, wobei jeder Verankerungsrahmen (2) ferner einen hufeisenförmigen Träger (18) aufweist, an der eine Tröpfchenberieselungsleitung eingerastet ist, wobei diese Berieselungsleitung (19) einem Seitenbereich des Hohlraums zugewandt ist, der durch die umgebende Struktur des Ablaufsammelkanals (3) begrenzt ist.

9. Kultivierungsvorrichtung nach einem der vorhergehenden Ansprüche 5 bis 8, wobei die Enden des Ablaufsammelkanals (3) durch Deckel (20) fest verschlossen sind, wovon jeder mindestens eine Ablaufleitung (21) aufweist; wobei die Deckel (20) mit den Enden des Ablaufsammelkanals (3) durch eine Nut- und -Feder-Verbindung verbunden sind.

10. Kultivierungsvorrichtung nach einem der vorhergehenden Ansprüche, wobei jeder Deckel (20) eine Frontplatte (20a) und einen Verstärkungsrahmen (20b) mit einem C-Querschnitt aufweist, der entlang seiner vollen Länge eine zusammenhängende Nut (22) enthält, in die jedes Ende des Ablaufsammelkanals (3) durch Pressung eingepasst ist.

11. Kultivierungsvorrichtung nach Anspruch 10, wobei die Ablaufleitung (21) sich von einem unteren und zentralen Teil der Frontplatte (20a) des Deckels (20) aus erstreckt.

12. Kultivierungsvorrichtung nach Anspruch 10 oder 11, wobei ein oberer Rand der Frontplatte (20a) mittels eines Längsstegs (23), der mit Rippen (24) kombiniert ist, verstärkt ist.

## Revendications

1. Dispositif de culture comprenant un élément d'espacement (1) et un canal de collecte de drainage (3), dans lequel l'élément d'espacement (1) est agencé dans le canal de collecte de drainage (3), et un substrat contenu à l'intérieur d'un élément de contenant (4, 5) est agencé sur l'élément d'espacement (1) ;
**caractérisé en ce que** l'élément d'espacement (1) comprend :
- une structure de grille (1a) sur la surface supérieure de laquelle est agencé l'élément de contenant (4, 5) ; dans lequel la structure de grille (1b) comprend des profilés longitudinal et transversal avec une section en T, excepté pour les profilés périphériques qui ont une section angulaire ;
- des pattes de support (1b) qui s'étendent à partir de la face inférieure de la structure de grille (1a) et sont au fond du canal de collecte de drainage (3), les pattes de support (1b) s'étendent à partir des points de jonction (7) où les profilés longitudinal et transversal convergent, composant la structure de grille (1a) ;
où l'élément d'espacement (1) est agencé dans l'espace interne du canal de collecte de drainage (3), générant un grand espace de drainage entre la structure de grille (1a) et la structure enveloppante du canal de collecte de drainage (3), les pattes de support (1b) étant positionnées dans ce grand espace de drainage.

2. Dispositif de culture selon la revendication 1, dans lequel les points de jonction (7) des pattes de support (1b) sont renforcés par des ailettes de renforcement (8) assemblées aux pattes de support (1b) et également à la structure de grille (1a).

3. Dispositif de culture selon l'une quelconque des revendications précédentes, dans lequel il comprend une structure modulaire composée de plusieurs éléments d'espacement (1) assemblés par leurs bords adjacents par le biais de couplages à languette et rainure composés de paires d'éléments de languette (9) et de rainure (10) positionnées dans les profilés périphériques desdits éléments d'espacement.

4. Dispositif de culture selon l'une quelconque des revendications précédentes, dans lequel il comprend des bâtis d'ancrage (2) en tant que moyen de fixation des éléments d'espacement (1) sur les côtés (3b) du canal de collecte de drainage (3).

5. Dispositif de culture selon la revendication 4, dans lequel chaque bâti d'ancrage (2) comprend :
- un profilé en U inversé (11) où chaque côté (3b) du canal de collecte de drainage (3) est monté, par serrage, dans l'espace interne (12) du profilé en forme de U inversé (11) ;
- un profilé angulaire (13) avec deux branches (13a, 13b), où les deux branches (13a, 13b) sont agencées contre les profilés latéraux (14) de l'élément d'espacement (1), lesdits profilés latéraux (14) ayant également une configuration angulaire.

6. Dispositif de culture selon la revendication 5, dans lequel les extrémités des deux branches (13a, 13b) du profilé angulaire (13) du bâti d'ancrage (2) se terminent par des brides en forme de L (15) qui s'encliquètent sur les bords libres (16) des deux branches des profilés latéraux (14) de l'élément d'espacement (1).

7. Dispositif de culture selon l'une quelconque des revendications 5 ou 6, dans lequel le profilé en forme de U (11) des bâtis d'ancrage (2) comprend des branches convergeant vers leurs extrémités libres, où l'une d'elles a une partie d'extrémité (17) se séparant vers l'extérieur, permettant ainsi l'insertion du côté (3b) du canal de collecte de drainage (3) dans l'espace interne (12) défini par les deux branches de ce profilé en forme de U inversé (11), le côté (3b) respectif du canal de collecte de drainage (3) étant verrouillé entre les deux branches.

8. Dispositif de culture selon l'une quelconque des revendications 4 à 7, dans lequel chaque bâti d'ancrage (2) comprend en outre un support en forme de fer à cheval (18) où un tuyau d'irrigation goutte-à-goutte est encliqueté, où ce tuyau d'irrigation (19) est orienté vers une zone latéral de l'espace creux défini par la structure enveloppante du canal de collecte de drainage (3).

9. Dispositif de culture selon l'une quelconque des revendications 5 à 8, dans lequel les extrémités du canal de collecte de drainage (3) sont fermées de manière étanche au moyen de couvercles (20), dont chacun comprend au moins un tuyau de drainage (21) ; où les couvercles (20) sont couplés aux extrémités du canal de collecte de drainage (3) par un couplage à languette et rainure.

10. Dispositif de culture selon la revendication précédente, dans lequel chacun des couvercles (20) comprend une plaque avant (20a) et un bâti de renforcement (20b) avec une section en forme de C qui comprend, le long de toute sa longueur, une rainure continue (22) où chacune des extrémités du canal de collecte de drainage (3) est encliquetée.

11. Dispositif de culture selon la revendication 10, dans lequel le tuyau de drainage (21) s'étend à partir d'une partie inférieure et centrée de la plaque avant (20a) du couvercle (20).

12. Dispositif de culture selon l'une quelconque des revendications 10 ou 11, dans lequel un bord supérieur de la plaque avant (20a) est renforcé au moyen d'une ailette longitudinale (23) combinée avec des nervures (24).
